# EUROPEAN PATENT APPLICATION

(11) **EP 3 695 805 A1**
(43) Date of publication of application: **19.08.2020**
(21) Application number: 20157374.8
(22) Date of filing: 14.02.2020
(51) Int. Cl.: A61C 13/00, G05B 19/406, G05B 19/401

(54) **OPERATION HISTORY DISPLAY SYSTEM AND METHOD FOR DENTAL PROCESSING MACHINE**

(30) Priority: 18.02.2019 JP 2019026303
(71) Applicant: DGSHAPE Corporation, Hamamatsu-shi, Shizuoka 431-2103 (JP)
(72) Inventor: YOSHIOKA, Shiro, Hamamatsu-shi, Shizuoka 431-2103 (JP); KAWAI, Takayuki, Hamamatsu-shi, Shizuoka 431-2103 (JP); AKIMOTO, Daisuke, Hamamatsu-shi, Shizuoka 431-2103 (JP); MADHU, Mani, Hamamatsu-shi, Shizuoka 431-2103 (JP)
(74) Representative: Grünecker Patent- und Rechtsanwälte PartG mbB

(57) **Abstract**

An operation history display system 1 creates, during a time set in advance, a graph G1 which is based on an operation history LG1 of a dental processing machine 100 and is stored in a storage 120 and in which a corresponding range to an operating time TM1 between a processing start time 133 and a processing end time 134 associated with each other is displayed in a first color CL1 and a corresponding range to a non-operating time TM2 that is not included in the operating time TM1 is displayed in a second color CL2, and displays the graph G1. A corresponding range to a non-operating time TM3 that is longer than the operating time TM1 of the processing program PG1 selected by the user is displayed in a third color CL3.

## Description

### BACKGROUND OF THE INVENTION

### 1. Field

The present invention relates to an operation history display system and method for a dental processing machine.

### 2. Description of the Background Art

For example, Japanese Laid-open Patent Publication No. 2015-120222 discloses a cutting machine that produces an object by performing cutting processing (which will be hereinafter referred to as processing) in which a workpiece made of a predetermined material, such as ceramic, resin, or the like, by molding is cut into a desired shape. The cutting machine disclosed in Japanese Laid-open Patent Publication No. 2015-120222 processes, using a bar-shaped processing tool, the workpiece by changing respective positions of the processing tool and the workpiece relative to each other while rotating the bar-shaped processing tool in an axial direction. As a result, a desired object can be produced.

### SUMMARY OF THE INVENTION

A dental processing machine used in the dental field is an example of the above described cutting machine. In the dental processing machine, a plurality of workpieces is processed and a plurality of objects, such as crown prostheses or the like, is produced in a predetermined period (for example, one day) in some cases. For example, after a processing plan in the predetermined period is made, the workpieces are processed in accordance with the processing plan. An operating time of the dental processing machine that processes the workpieces varies depending on the shapes of the objects and types of the workpieces. The processing plan is made based on experiences in many cases and, depending on a person who makes a processing plan, the processing plan includes many non-operating times in which processing is not performed. Therefore, an efficient processing plan cannot be made in some cases.

In view of the foregoing, preferred embodiments of the present invention provide an operation history display system and a method for a dental processing machine with which an efficient processing plan can be easily made. This is achieved by the features of the independent claims.

An operation history display system for a dental processing machine disclosed herein includes a storage in which an operation history in which a processing start time and a processing end time are associated is stored for each processing program executed by a dental processing machine and a display processing device communicably connected to the storage. The display processing device includes a creation processing section, a display processing section, a determination processing section, and a color display processing section. The creation processing section creates, during a time set in advance, a graph which indicates a history of an operation of the dental processing machine based on the operation history and in which a corresponding range to an operating time between the processing start time and the processing end time associated in the storage is displayed in a first color and a corresponding range to a non-operating time that is not included in the operating time is displayed in a second color that is different from the first color. The display processing section displays the graph. The determination processing section determines one processing program selected by a user. The color display processing section changes display such that the corresponding range in the graph to the non-operating time that is longer than the operating time of the processing program determined by the determination processing section is displayed in a third color that is different from the first color and the second color.

According to the operation history display system for the dental processing machine, in the graph displayed by the display processing section, the corresponding range to the operating time of the dental processing machine, the corresponding range to the non-operating time, and the corresponding range to the non-operating time that is longer than the operating time in the processing program selected by the user are indicated in different colors. The user can grasp at a glance during which non-operating time the dental processing machine was caused to execute the processing program selected by the user from the graph displayed by the display processing section. Accordingly, in making a processing plan including a similar processing program to the selected processing program, an efficient processing plan can be easily made with reference to the graph.

According to the present invention, an operation history display system for a dental processing machine with which an efficient processing plan can be easily made can be provided.

### BRIEF DESCRIPTION OF THE DRAWINGS

[FIG. 1] FIG. 1 is a conceptual view of an operation history display system according to a preferred embodiment of the present invention.
[FIG. 2] FIG. 2 is a perspective view of a dental processing machine.
[FIG. 3] FIG. 3 is a front view of the dental processing machine, illustrating a state in which a cover is opened.
[FIG. 4] FIG. 4 is a perspective view of a tool magazine, a rotation supporting member, and a clamp.
[FIG. 5] FIG. 5 is a block diagram of the operation history display system.
[FIG. 6] FIG. 6 is a view illustrating an example of a log file.
[FIG. 7] FIG. 7 is a view illustrating a display screen.
[FIG. 8] FIG. 8 is a view illustrating a display screen according to another preferred embodiment of the present invention.

### DETAILED DESCRIPTION OF THE PREFERRED EMBODIMENTS

With reference to the attached drawings, operation history display systems for a dental processing machine (which will be hereinafter referred to as an operation history display system) according to preferred embodiments of the present invention will be described below. Note that, as a matter of course, preferred embodiments described herein are not intended to be particularly limiting the present invention.

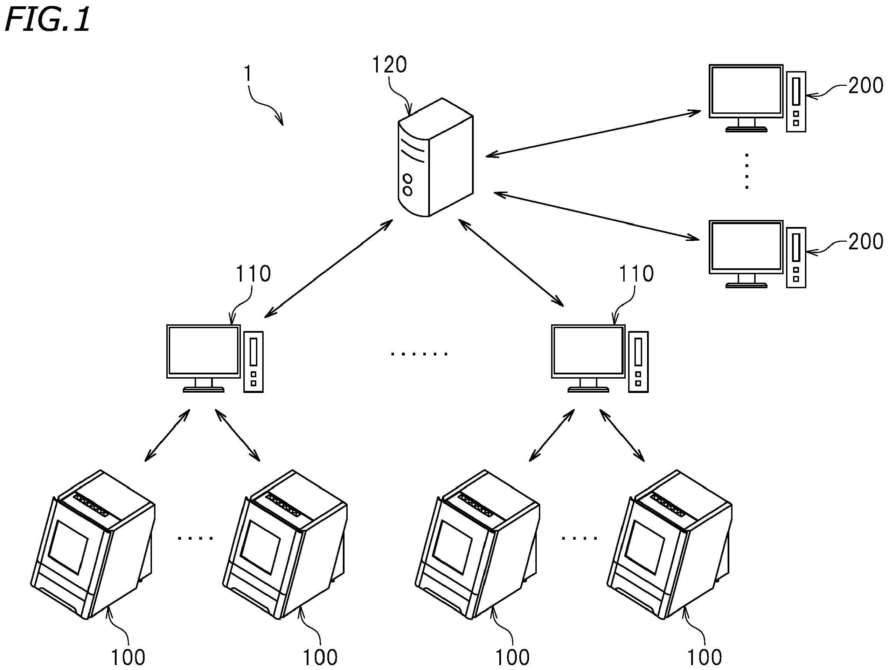

FIG. 1 is a conceptual view of an operation history display system 1 according to a preferred embodiment of the present invention. The operation history display system 1 displays a history of an operation of each of a plurality of dental processing machines 100. First, an outline of the operation history display system 1 will be described.

As illustrated in FIG. 1, the operation history display system 1 includes a dental processing machine 100, an operation terminal 110, a server 120, an operation history display device 200. There is no particular limitation on the number of the dental processing machines 100 according to this embodiment. The number of the dental processing machines 100 may be one or more. The operation terminal 110 is used by a user to operate the dental processing machine 100. One or more dental processing machines 100 are communicably connected to the operation terminal 110. Note that there is no particular limitation on the number of the operation terminals 110 according to this embodiment. The number of the operation terminals 110 may be one or more. The server 120 collectively manages information for the plurality of dental processing machines 100. One or more dental processing machines 100 are connected to the server 120. In this embodiment, the plurality of operation terminals 110 is communicably connected to the server 120 and the plurality of dental processing machines 100 is connected to the server 120 via the operation terminals 110.

The operation history display device 200 displays histories of operations of the dental processing machines 100. Herein, the operation history display device 200 is communicably connected to the server 120. Note that there is no particular limitation on the number of operation history display devices 200. The number of operation history display devices 200 may be one or more. Note that, in this embodiment, the operation history display system 1 may be realized by a client-server type system and may be realized by cloud computing. The dental processing machine 100, the operation terminal 110, the server 120, and the operation history display device 200 will be described in detail below.

First, the dental processing machines 100 will be described. The plurality of dental processing machines 100 is different types in some cases. However, basic configurations of the plurality of dental processing machines 100 are the same. Therefore, a basic configuration of one of the dental processing machines 100 will be described herein.

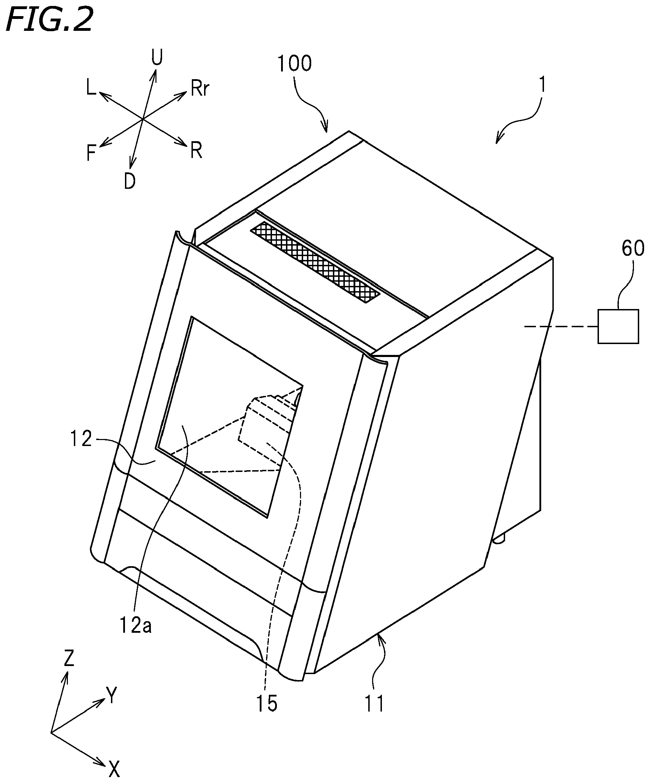

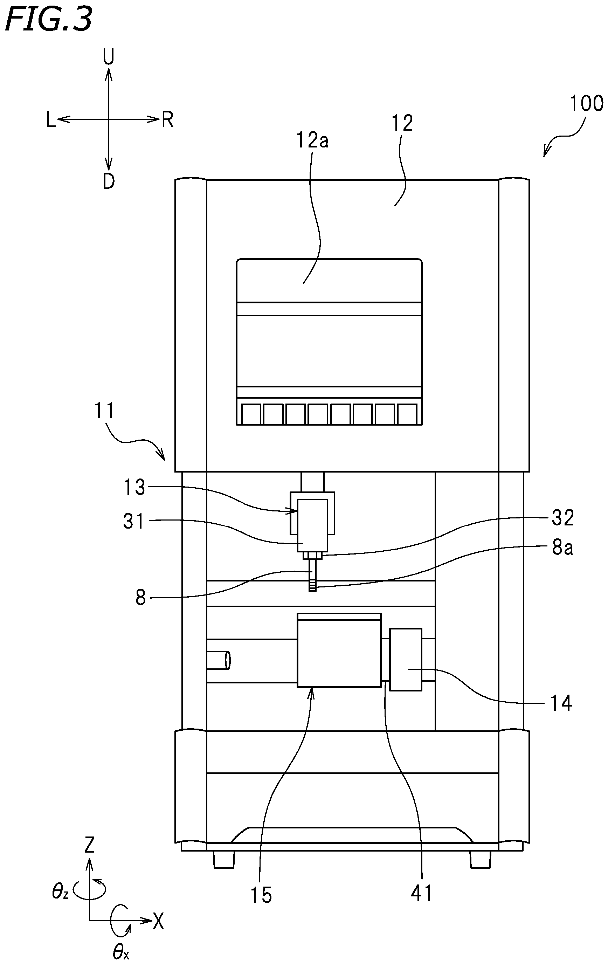

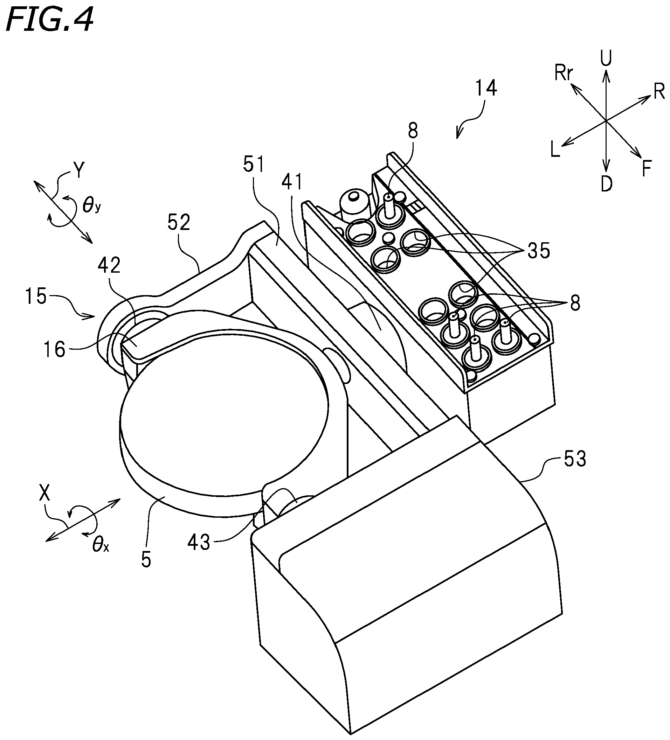

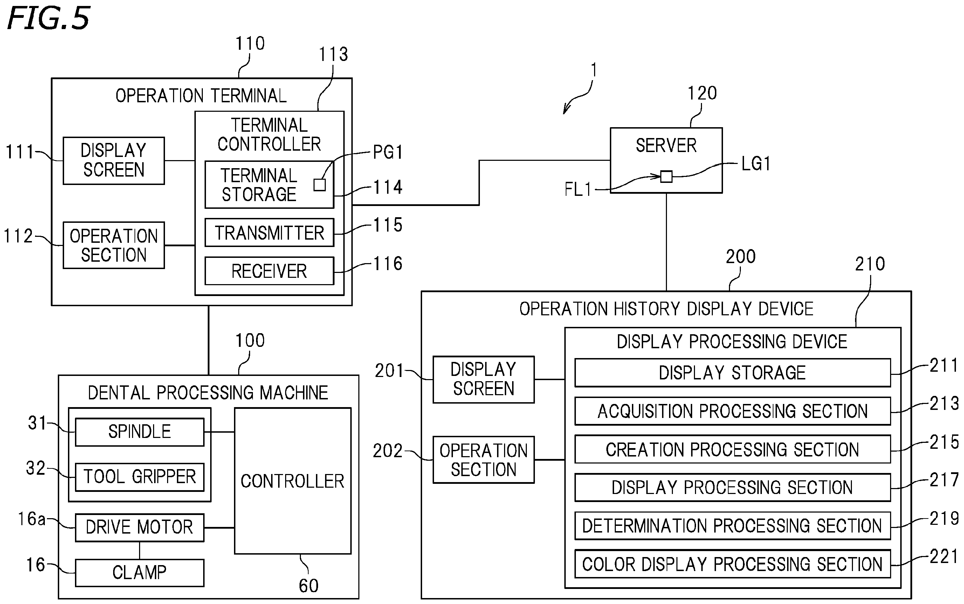

FIG. 2 is a perspective view of the dental processing machine 100. FIG. 3 is a front view of the dental processing machine 100, illustrating a state in which a cover 12 is opened. FIG. 4 is a perspective view of a tool magazine 14, a rotation supporting member 15, and a clamp 16 which will be described later. FIG. 5 is a block diagram of the operation history display system 1. In the following description, left and right mean left and right when viewed from a user who is in front of the dental processing machine 100, respectively. A bottom surface that forms a space inside a main body 11 of the dental processing machine 100 is downwardly inclined in a direction from a near side to a further side when viewed from the user. Therefore, in this embodiment, a direction in which the user moves away from the dental processing machine 100 along the bottom surface is a front direction and a direction in which the user approaches the dental processing machine 100 along the bottom surface is a rear direction. Up and down in a direction perpendicular to the bottom surface mean up and down. Note that reference symbols F, Rr, L, R, U, and D in the drawings indicate front, rear, left, right, up, and down, respectively.

In this embodiment, where axes that are perpendicular to each other are an X axis, a Y axis, and a Z axis, the dental processing machine 100 is arranged in a plane surface formed by the X axis and the Y axis. The X axis extends in a left-right direction, the Y axis extends in a front-rear direction, and the Z axis extends in an up-down direction. The reference symbols θx, θy, and θz in the drawings indicate rotational directions around the X axis, the Y axis, and the Z axis, respectively. However, these directions are used herein merely for convenience of description, do not limit setting modes of the dental processing machine 100, and do not limit the present invention.

The dental processing machine 100 is used in the dental field. The dental processing machine 100 produces an object by processing a workpiece 5 (see FIG. 4). Herein, there is no particular limitation on a type of the object. However, the object is, for example, a crown prosthesis. Examples of the crown prosthesis include, for example, an inlay, a crown, a bridge, or the like. In this embodiment, the dental processing machine 100 produces a crown prosthesis from the workpiece 5.

The workpiece 5 has, for example, a disk shape. The workpiece 5 is made of various materials, such as zirconia, a wax, a polymethyl methacrylate resin (PMMA), a hybrid resin, a polyether ether ketone resin (PEEK), plaster, or the like. When zirconia is used as a material of the workpiece 5, for example, semi-sintered zirconia is used. However, there is no particular limitation on the shape and material of the workpiece 5.

As illustrated in FIG. 2, the dental processing machine 100 includes the main body 11, the cover 12, a processing mechanism 13 (see FIG. 3), the tool magazine 14 (see FIG. 4), the rotation supporting member 15, and the clamp 16 (see FIG. 4). The main body 11 is formed into a box shape and has a space inside. Although not illustrated in detail, the bottom surface that forms the space is downwardly inclined in a direction from the front to the rear. A front portion of the main body 11 is opened. As illustrated in FIG. 3, the cover 12 is supported by the main body 11 such that the opening of the main body 11 is openable and closable. A window 12a is provided in the cover 12. The user can view inside of the main body 11 through the window 12a.

As illustrated in FIG. 3, the processing mechanism 13 cuts the workpiece 5 using a processing tool 8. The processing mechanism 13 is brought into contact with the workpiece 5 while the processing tool 8 is rotated, thereby processing the workpiece 5. The processing mechanism 13 includes a spindle 31 and a tool gripper 32. The spindle 31 rotates the tool gripper 32 and the processing tool 8 gripped by the tool gripper 32 with a longitudinal direction as an axis. The spindle 31 is provided so as to be exchangeable with respect to the main body 11. The spindle 31 extends in the up-down direction and is configured to be rotatable around the Z axis (θz). The tool gripper 32 grips the processing tool 8 and is provided in the spindle 31. Specifically, the tool gripper 32 is provided on a bottom surface of the spindle 31. The spindle 31 rotates around the Z axis (θz), and thus, the tool gripper 32 and the processing tool 8 gripped by the tool gripper 32 rotate around the Z axis (θz), in other words, around a central axis of the processing tool 8. In this embodiment, the processing mechanism 13 is configured to be moved in the left-right direction and the up-down direction by a first driving mechanism (not illustrated).

In this embodiment, provided are a plurality of processing tools 8 which are gripped by the tool gripper 32. Each of the processing tools 8 has a bar shape and includes an edge tool 8a in a lower portion. The plurality of processing tools 8 each including the edge tool 8a with a different shape is prepared in advance. During processing, the processing tool 8 gripped by the tool gripper 32 is replaced with another processing tool 8 as necessary in accordance with a processing program PG1 (see FIG. 5) which will be described later.

As illustrated in FIG. 4, the tool magazine 14 can store the plurality of processing tools 8. In this embodiment, the tool magazine 14 is formed into a box shape. A plurality of storage holes 35 in which the processing tools 8 is stored are formed in an upper surface of the tool magazine 14. The processing tools 8 are inserted through the storage holes 35 with upper portions of the processing tools 8 exposed through the storage holes 35. Note that there is no particular limitation on the number of the storage holes 35. In this embodiment, the number of the storage holes 35 is ten. Therefore, in this embodiment, ten processing tools 8 can be stored in the tool magazine 14. In replacing the processing tool 8 gripped by the tool gripper 32, the processing tool 8 gripped by the tool gripper 32 is returned to the corresponding one of the storage holes 35. Then, the processing mechanism 13 is moved to a position over the processing tool 8 that is to be used next. Thereafter, an upper edge of the processing tool 8 located under the tool gripper 32 is gripped by the tool gripper 32.

In this embodiment, a first rotation axis 41 that rotationally supports the rotation supporting member 15 is provided in the tool magazine 14. The first rotation axis 41 extends in the left-right direction and is connected to the rotation supporting member 15. Although not illustrated, a second driving mechanism that rotates the first rotation axis 41 is provided in the tool magazine 14. The first rotation axis 41 is configured to be rotatable around the X axis (θx) by the second driving mechanism. The first rotation axis 41 rotates around the X axis (θx), and thus, the rotation supporting member 15 rotates around the X axis (θx).

The rotation supporting member 15 rotatably supports the clamp 16. The rotation supporting member 15 is formed into a substantially C shape. The rotation supporting member 15 is connected to the tool magazine 14 via the first rotation axis 41. The rotation supporting member 15 includes a first portion 51, a second portion 52, and a third portion 53. The first portion 51 is disposed on a left side of the tool magazine 14 and extends in the front-rear direction. The second portion 52 extends leftward from a rear end of the first portion 51. The third portion 53 extends leftward from a front end of the first portion 51. The third portion 53 is opposed to the second portion 52. In this embodiment, the clamp 16 is disposed between the second portion 52 and the third portion 53.

The clamp 16 supports the workpiece 5 in processing the workpiece 5. In this embodiment, an adapter (not illustrated) is attached to the workpiece 5, and the clamp 16 supports the workpiece 5 via the adapter. For example, the clamp 16 has a shape corresponding to a portion of a shape of the workpiece 5. Herein, the clamp 16 has a substantially C shape. In this embodiment, processing is performed on the workpiece 5 supported by the clamp 16. The clamp 16 is rotatably supported by the second portion 52 and the third portion 53 of the rotation supporting member 15. One end of a second rotation axis 42 is connected to a rear portion of the clamp 16, and the second portion 52 is connected to the other end of the second rotation axis 42. One end of a third rotation axis 43 is connected to a front portion of the clamp 16, and the third portion 53 is connected to the other end of the third rotation axis 43. In this embodiment, a drive motor 16a (see FIG. 5) that rotates the clamp 16 around the Y axis (θy) is provided in the third portion 53.

As illustrated in FIG. 2, the dental processing machine 100 includes a controller 60. The controller 60 controls cutting processing of the workpiece 5. The controller 60 is formed of a microcomputer and is provided inside the main body 11. The controller 60 includes, for example, a central processing unit (CPU), a ROM that stores a program or the like which is executed by the CPU, a RAM, or the like. Herein, control of processing of the workpiece 5 is performed using the program stored in the microcomputer.

As illustrated in FIG. 5, the controller 60 is communicably connected to the spindle 31 and controls rotation of the spindle 31. The controller 60 is communicably connected to the drive motor 16a that rotates the clamp 16 around the Y axis (θy) and controls the drive motor 16a. Although not illustrated, the controller 60 is communicably connected to the first driving mechanism that moves the processing mechanism 13 in the left-right direction and the up-down direction and controls the first driving mechanism. Although not illustrated, the controller 60 is communicably connected to the second driving mechanism that rotates the first rotation axis 41 and controls the second driving mechanism.

The dental processing machine 100 according to this embodiment may be a dental processing machine with a so-called a disk changer. Note that, as the disk changer in this case, a known disk changer can be employed. As the disk changer, for example, a workpiece conveying device described in Japanese Laid-open Patent Publication No. 2018-89763 can be employed.

The dental processing machine 100 according to this embodiment automatically processes the workpiece 5 using the one or more processing tools 8, based on the processing program PG1, and thus, produces desired one or more objects. The dental processing machine 100 processes the workpiece 5, based on the processing program PG1. The processing program PG1 is a so-called NC program (NC data) or a job program (job data). The processing program PG1 indicates in what kind of procedure the dental processing machine 100 processes the workpiece 5. In the processing program PG1, a plurality of commands in which an operation of the processing mechanism 13 and an operation of the clamp 16 that supports the workpiece 5 are defined by coordinate values is recorded.

The processing program PG1 is created, for example, by a CAM device. CAM is an abbreviation of computer aided manufacturing, and the CAM device is a device called computer aided manufacturing device. The CAM device creates the processing program PG1, based on data (which will be hereinafter also referred to as object data) for a shape or shapes of one or more objects that are produced by processing the workpiece 5. Note that the object data is STL data, and is data created, for example, by a computer aided design device (which will be hereinafter also referred to as a computer aided design (CAD) device). The processing program PG1 created by the CAM device is transmitted to the dental processing machine 100, for example, at a start of processing. The dental processing machine 100 then sequentially executes a command of the received processing program PG1 to produce one or more objects from the workpiece 5.

The operation terminal 110 illustrated in FIG. 1 will be described next. In this embodiment, the plurality of operation terminals 110 has the same configuration. Therefore, a configuration of one of the operation terminals 110 will be described below. The operation terminal 110 is used to operate the dental processing machine 100. The operation terminal 110 is realized, for example, by a personal computer. The operation terminal 110 may be realized by a general-purpose computer and may be realized by a dedicated computer.

As illustrated in FIG. 1, one or more dental processing machine 100 are communicably connected to the operation terminal 110. The operation terminal 110 can operate the one or more dental processing machines 100 communicably connected thereto. As illustrated in FIG. 5, the operation terminal 110 includes, for example, a display screen 111, an operation section 112, and a terminal controller 113. There is no particular limitation on a type of the display screen 111. The display screen 111 is, for example, a display of a desktop-type or notebook-type personal computer. The operation section 112 is, for example, a keyboard and a mouse of the personal computer. However, the operation section 112 may be a touch panel provided on the display screen 111.

The terminal controller 113 is, for example, a microcomputer. There is no particular limitation on a configuration of a hardware of the microcomputer. For example, the microcomputer includes a CPU, a ROM, a RAM, a storage, or the like. The terminal controller 113 is communicably connected to the display screen 111 and the operation section 112.

A dedicated application used for operating the dental processing machine 100 is installed in the terminal controller 113. The application is displayed on the display screen 111, and the user operates the application via the operation section 112 and thus can operates the dental processing machine 100. The terminal controller 113 includes a terminal storage 114, a transmitter 115, and a receiver 116.

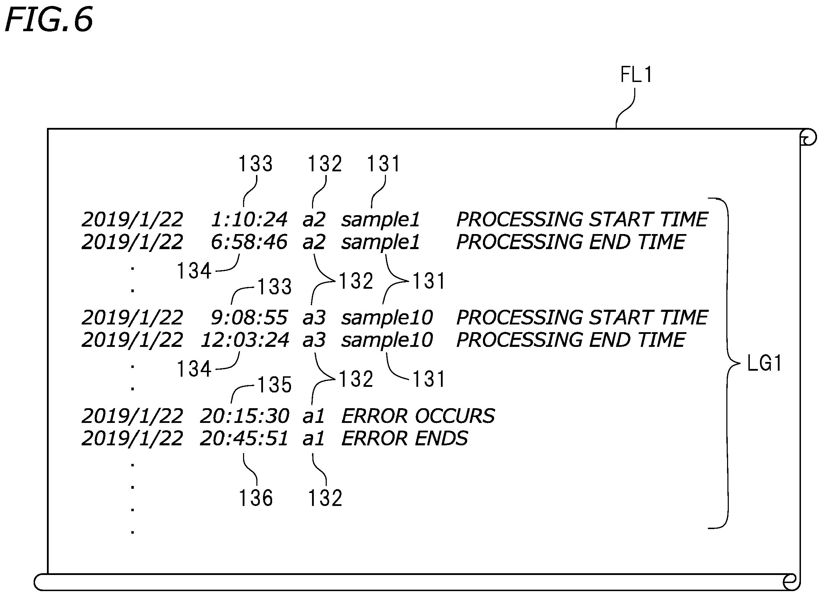

The processing program PG1 is stored in the terminal storage 114. For example, when the dental processing machine 100 is caused to process the workpiece 5, the transmitter 115 transmits the processing program PG1 to the controller 60 of the dental processing machine 100. The dental processing machine 100 executes the processing program PG1 received by the dental processing machine 100 to process the workpiece 5, thereby producing one or more desired objects. The receiver 116 receives information for processing from the controller 60 of the dental processing machine 100. Herein, the information for processing includes, for example, a processing start time 133 (see FIG. 6) and a processing end time 134 (see FIG. 6). Note that the information for processing received by the receiver 116 is stored in the terminal storage 114.

Next, the server 120 illustrated in FIG. 1 will be described. One or more operation terminals 110 are communicably connected to the server 120, and one or more dental processing machine 100 are communicably connected to the server 120 via the one or more operation terminal 110. For example, when the operation history display system 1 is realized by cloud computing, the server 120 is a cloud. The server 120 is an example of a storage of the present invention.

As illustrated in FIG. 5, an operation history LG1 of the dental processing machine 100 that is a connection destination is stored in the server 120. In this embodiment, a log file FL1 in which the operation history LG1 is recorded is stored in the server 120. FIG. 6 is a view illustrating an example of the log file FL1. As illustrated in FIG. 6, in the log file FL1, the operation history LG1 in which the processing start time 133 and the processing end time 134 are associated is recorded for each processing program PG1 (see FIG. 5). In this embodiment, in the log file FL1, a file name 131 (which will be hereinafter referred to as a processing program name 131) of the processing program PG1, a device ID 132 of the dental processing machine 100, the processing start time 133, and the processing end time 134 are associated with each other and recorded.

Herein, the device ID 132 is a specific ID given to each dental processing machine 100. The dental processing machine 100 can be uniquely specified by the device ID 132. Therefore, which dental processing machine 100's operation history LG1 is stored can be specified based on the device ID 132. The processing start time 133 is a time of a start of processing of the workpiece 5 by the dental processing machine 100. Herein, the processing start time 133 is a time of a start of execution of the processing program PG1 by the dental processing machine 100, that is, in other words, a time of execution of a first command of the processing program PG1 by the dental processing machine 100. The processing end time 134 is a time of end of processing of the workpiece 5 by the dental processing machine 100. Herein, the processing end time 134 is a time of end of execution of the processing program PG1 by the dental processing machine 100, that is, in other words, a time of execution of a last command of the processing program PG1 by the dental processing machine 100.

In this embodiment, the processing start time 133 and the processing end time 134 are acquired from the dental processing machine 100. The processing start time 133 and the processing end time 134 are transmitted to the operation terminal 110 from the dental processing machine 100, and the receiver 116 (see FIG. 5) of the operation terminal 110 receives the processing start time 133 and the processing end time 134. Herein, the device ID 132 of the dental processing machine 100 and the file name 131 of the processing program PG1 executed by the dental processing machine 100 are associated with each other and stored in the terminal storage 114 (see FIG. 5) of the operation terminal 110. However, the device ID 132 and the processing program name 131 may be transmitted to the operation terminal 110 from the dental processing machine 100, and thus be obtained. The transmitter 115 of the operation terminal 110 transmits the processing program name 131, the device ID 132, and the processing start time 133 and the processing end time 134 that have been received to the server 120. Note that the processing program name 131, the device ID 132, the processing start time 133, and the processing end time 134 may be transmitted to the server 120 at the same timing and may be transmitted to the server 120 at different timings. As illustrated in FIG. 6, in the log file FL1 stored in the server 120, the processing program name 131, the device ID 132, the processing start time 133, and the processing end time 134 that have been received are associated and recorded.

Note that, the term "associated" in the log file FL1 of this embodiment means "recorded in accordance with a predetermined format" and means, for example, a state in which the processing program name 131, the device ID 132, and the processing end time 134 that correspond to the processing start time 133 in question is uniquely determined based on the processing start times 133. In other words, the term "associated" means, for example, a state in which the processing program name 131, the device ID 132, and the processing start time 133 that correspond to the processing end time 134 in question is uniquely determined based on the processing end times 134.

In this embodiment, in the operation history LG1, an error occurrence time 135 and an error end time 136 are associated. In the log file FL1, the device ID 132, the error occurrence time 135, and the error end time 136 are associated and recorded. Herein, the error occurrence time 135 is a time of occurrence of an error in the dental processing machine 100. When an error occurs in the dental processing machine 100, the error occurrence time 135 is transmitted to the operation terminal 110 from the dental processing machine 100. The error end time 136 is a time of end of the error that has occurred in the dental processing machine 100. The time of end of the error is, for example, a time when the user operates the dental processing machine 100 to correct the error and then presses an error correction button on an operation panel (not illustrated) in the dental processing machine 100. When the error that has occurred in the dental processing machine 100 ends in the above described manner, the error end time 136 is transmitted to the operation terminal 110 from the dental processing machine 100.

The transmitter 115 (see FIG. 5) of the operation terminal 110 transmits the device ID 132, the error occurrence time 135, and the error end time 136 to the server 120. Note that the device ID 132, the error occurrence time 135, and the error end time 136 may be transmitted to the server 120 at the same timing and may be transmitted to the server 120 at different timings. Then, the device ID 132, the error occurrence time 135, and the error end time 136 that have been received by the server 120 are associated and stored in the log file FL1 stored in the server 120, as illustrated in FIG. 6.

Note that the log file FL1 may be formed of one file and may be formed of a plurality of files. For example, when the log file FL1 is formed of a plurality of files, the log file FL1 may be created for each dental processing machine 100.

Next, the operation history display device 200 will be described. The operation history display device 200 displays a history of an operation of each of one or more dental processing machines 100. Similar to the operation terminal 110, the operation history display device 200 is realized, for example, by a personal computer. The operation history display device 200 may be realized by a general-purpose computer and may be realized by a dedicated computer.

As illustrated in FIG. 1, the operation history display device 200 is communicably connected to the server 120. The operation history display device 200 acquires the operation history LG1 stored in the server 120, and displays a history of an operation of each dental processing machine 100, based on the acquired operation history LG1. As illustrated in FIG. 5, the operation history display device 200 includes a display screen 201, an operation section 202, and a display processing device 210.

There is no particular limitation on a type of the display screen 201. The display screen 201 is, for example, a display of a mobile terminal. However, the display screen 201 may be a display of a desktop-type or laptop personal computer.

The operation section 202 is operated by the user. For example, the user can switch display on the display screen 201 by operating the operation section 202. Note that there is no particular limitation on the type of the operation section 202. For example, the operation section 202 is a touch panel provided on the display screen 201. However, the operation section 202 may be a keyboard or a mouse of the personal computer.

The display processing device 210 acquires the log file FL1 in which the operation history LG1 is recorded from the server 120 and displays the operation history LG1 on the display screen 201 for each dental processing machine 100. Note that there is no particular limitation on a configuration of the display processing device 210. The display processing device 210 is a so-called controller. The display processing device 210 is, for example, a microcomputer. The display processing device 210 includes a CPU, a ROM, a RAM, a storage, or the like. In this embodiment, the display processing device 210 is a separate device from the server 120. However, the display processing device 210 may be integrally formed with the server 120. In this embodiment, the display processing device 210 is a separate device from the operation terminal 110. However, the display processing device 210 may be integrally formed with the operation terminal 110. In this case, the display processing device 210 may be incorporated in the terminal controller 113 of the operation terminal 110. In this embodiment, the display processing device 210 is communicably connected to the server 120 via a wired communication or a wireless communication.

In this embodiment, as illustrated in FIG. 5, the display processing device 210 includes a display storage 211, an acquisition processing section 213, a creation processing section 215, a display processing section 217, a determination processing section 219, and a color display processing section 221. Each element of the display processing device 210 may be configured by a software and may be configured by a hardware. Each element of the display processing device 210 may be realized by one or more processors and may be incorporated in a circuit.

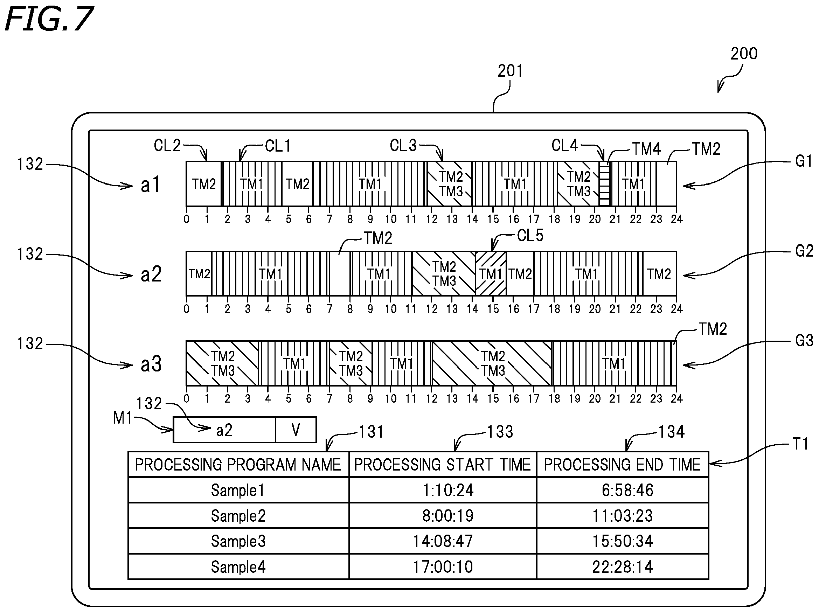

The acquisition processing section 213 acquires the log file FL1 stored in the server 120. FIG. 7 is a view illustrating an example of the display screen 201 of the operation history display device 200. The creation processing section 215 creates band graphs G1, G2, and G3, based on the operation history LG1 recorded in the log file FL1. Herein, the band graphs G1, G2, and G3 are graphs each indicating a history of an operation of each dental processing machine 100, based on the operation history LG1. Herein, the band graph G1 is a graph indicating a history of an operation of the dental processing machine 100 the device ID 132 of which is a1. The band graph G2 is a graph indicating a history of an operation of the dental processing machine 100 the device ID 132 of which is a2. The band graph G3 is a graph indicating a history of an operation of the dental processing machine 100 the device ID 132 of which is a3. Note that there is no particular limitation on the number of band graphs created by the creation processing section 215. The number of band graphs created by the creation processing section 215 is set based on the number of the dental processing machines 100 connected to the server 120 or the number of the dental processing machines 100 set in advance by the user, as appropriate.

In this embodiment, the band graphs G1, G2, and G3 have the same configuration. Therefore, the band graph G1 corresponding to the dental processing machine 100 the device ID 132 of which is a1 will be described below. The band graph G1 is a graph indicating the operation history LG1 of the dental processing machine 100 (the dental processing machine 100 the device ID 132 of which is a1 herein) during a time (in other words, a period) set in advance. Herein, the time set in advance is stored in the display storage 211. The time set in advance may be appropriately set by the user and may be a fixed time. In this embodiment, the user sets the time by operating the operation section 202. Herein, the time set in advance is one day. In the band graph G1, a history of an operation for a predetermined one day is displayed.

Note that there is no particular limitation on steps of creating the band graph G1 by the creation processing section 215. In this embodiment, the creation processing section 215 extracts the processing program name 131, the processing start time 133, and the processing end time 134 that correspond to the dental processing machine 100 the device ID 132 of which is a1 from the operation history LG1 (see FIG. 5) of the log file FL1 stored in the server 120. For example, in the example of FIG. 6, the processing program name 131, the processing start time 133, and the processing end time 134 are extracted by extracting a row including a2 as the device ID 132. Herein, the processing start time 133 and the processing end time 134 are associated for each processing program name 131, and the creation processing section 215 sets a time between the processing start time 133 and the processing end time 134 associated with the same processing program name 131 as an operating time TM1. In this embodiment, in the dental processing machine 100 the device ID 132 of which is a1, the number of processing programs PG1 executed on the predetermined one day is four. Therefore, in the band graph G1, the operating time TM1 is set for each of the four processing programs PG1, and therefore, there are four operating times TM1.

In this embodiment, as illustrated in FIG. 7, the band graph G1 includes an error time TM4. The creation processing section 215 extracts the error occurrence time 135 and the error end time 136 that correspond to the dental processing machine 100 the device ID 132 is a1 from the operation history LG1 (see FIG. 6) stored in the server 120. Then, a time between the error occurrence time 135 and the error end time 136 associated with each other is set as the error time TM4.

Note that, in this embodiment, a time other than the operating time TM1 and the error time TM4 is set as a non-operating time TM2. In the band graph G1, four operating times TM1 are set, five non-operating times TM2 are set, and one error time TM4 is set. The creation processing section 215 can create the band graphs G2 and G3 in accordance with similar steps to the steps for creating the band graph G1.

The display processing section 217 displays the band graphs G1, G2, and G3 created by the creation processing section 215 on the display screen 201, as illustrated in FIG. 7. In this embodiment, the band graphs G1, G2, and G3 are displayed so as to be arranged in the up-down direction. However, there is no particular limitation on display positions of the band graphs G1, G2, and G3.

In this embodiment, the display processing section 215 creates a processing program list table T1. The processing program list table T1 is a table indicating the processing start time 133 and the processing end time 134 of the processing program PG1 and is created for each dental processing machine 100. There is no particular limitation on items displayed on the processing program list table T1. Herein, the processing program list table T1 includes, as items, the processing program name 131, the processing start time 133, and the processing end time 134. Note that, similar to the band graphs G1, G2, and G3, the processing program list table T1 is created based on the operation history LG1 of the log file FL1.

The display processing section 217 according to this embodiment displays the processing program list table T1 with the band graphs G1, G2, and G3 on the display screen 201. Herein, the processing program list table T1 is arranged under the band graphs G1, G2, and G3. However, there is no particular limitation on a position of the processing program list table T1. Note that a pull-down menu M1 via which the user can select the device ID 132 is displayed on the display screen 201. The pull-down menu M1 operates in linkage with the processing program list table T1. The display processing section 217 displays the processing program list table T1 of the dental processing machine 100 corresponding to the device ID 132 selected by the user in the pull-down menu M1 on the display screen 201. In the example of FIG. 7, the dental processing machine 100 the device ID 132 of which is a2 is selected in the pull-down menu M1 and the processing program list table T1 of the processing programs PG1 executed by the dental processing machine 100 the device ID 132 of which is a2 is displayed.

In this embodiment, the operation history display device 200 is configured to select one processing program PG1 executed in one of the dental processing machines 100 and display the non-operating time TM2 that is longer than the operating time TM1 of the selected processing program PG1 in an easily understandable manner. Specifically, the determination processing section 219 determines the processing program PG1 selected by the operation of the operation section 202 by the user. For example, when the user operates the operation section 202 to select the processing program PG1 indicated by "Sample3" in the processing program name 131 of the processing program list table T1, the determination processing section 219 determines that the processing program PG1 the processing program name 131 of which is "Sample3" was selected.

Next, the color display processing section 221 selects the non-operating time TM2 (which will be hereinafter referred to as a determined non-operating time TM3) that is longer than the operating time TM1 of the processing program PG1 determined by the determination processing section 219 and displays corresponding ranges in the band graphs G1, G2, and G3 to the determined non-operating time TM3, in different colors. In the example of FIG. 7, the number of the determined non-operating times TM3 is two in the band graph G1, one in the band graph G2, and three in the band graph G3.

In this embodiment, corresponding ranges in the band graphs G1, G2, and G3 to the operating time TM1, corresponding ranges in the band graphs G1, G2, and G3 to the non-operating time TM2, the corresponding ranges in the band graphs G1, G2, and G3 to the determined non-operating time TM3, and corresponding ranges in the band graphs G1, G2, and G3 to the error time TM4 are displayed using different colors. For example, the corresponding ranges in the band graphs G1, G2, and G3 to the operating time TM1 are displayed in a first color CL1, and the corresponding ranges in the band graphs G1, G2, and G3 to the non-operating time TM2 are displayed in a second color CL2. The corresponding ranges in the band graphs G1, G2, and G3 to the determined non-operating time TM3 are displayed in a third color CL3, and the corresponding ranges in the band graphs G1, G2, and G3 to the error time TM4 are displayed in a fourth color CL4. The first color CL1 to the fourth color CL4 are different colors. There is no particular limitation on specific colors of the first color CL1 to the fourth color CL4. For example, the first color CL1 is blue, the second color CL2 is white, the third color CL3 is green, and the fourth color CL4 is red. Note that corresponding ranges in the band graphs G1, G2, and G3 to the operating time TM1 of the processing program PG1 determined by the determination processing section 219 may be displayed in a fifth color CL5 (for example, light blue) that is different from the first color CL1 to the fourth color CL4. The color display processing section 221 displays the corresponding ranges in the band graphs G1, G2, and G3 to the operating time TM1 of the processing program PG1 determined by the determination processing section 219 in the fifth color CL5. Note that, in this embodiment, colors herein include colorless.

In this embodiment, the creation processing section 215 creates the band graphs G1, G2, and G3 in which corresponding ranges to the operating time TM1 are displayed in the first color CL1, corresponding ranges to the non-operating time TM2 are displayed in the second color CL2, corresponding ranges to the error time TM4 are displayed in the fourth color CL4. The color display processing section 221 determines the non-operating time TM2 that is longer than the operating time TM1 of the processing program PG1 determined by the determination processing section 219 to be the determined non-operating time TM3 and changes display such the corresponding ranges in the band graphs G1, G2, and G3 to the determined non-operating time TM3 are displayed in the third color CL3.

In this embodiment, each time the user selects the processing program PG1, the determined non-operating time TM3 that is to be a subject differs. The determined non-operating time TM3 belongs to the non-operating time TM2. The corresponding ranges to the determined non-operating time TM3 are displayed not in the second color CL2 corresponding to the non-operating time TM2 but in the third color CL3.

The dental processing machine 100 that can be a subject of the determined non-operating time TM3 may be changed as appropriate. In this embodiment, the non-operating time TM2 in each of the dental processing machines 100 the device IDs 132 of which are a1, a2, and a3 is a subject that can be the determined non-operating time TM3. However, for example, the non-operating time TM2 in each of the dental processing machines 100 the device IDs 132 of which are a1 and a3 may be a subject that can be the determined non-operating time TM3, and the non-operating time TM2 of the dental processing machine 100 the device ID 132 of which is a2 may be a non-subject.

As has been described above, in this embodiment, as illustrated in FIG. 7, in the band graph G1 displayed on the display screen 201 of the operation history display device 200, the corresponding ranges to the operating time TM1 of the dental processing machine 100, the corresponding ranges to the non-operating time TM2, and the corresponding ranges to the non-operating time (that is, the determined non-operating time TM3) which is longer than the operating time TM1 in the processing program PG1 selected by the user are indicated in different colors. The user can grasp at a glance in which non-operation time TM2 the processing program PG1 selected by the user can be executed. Thus, when the user makes a processing plan including a similar processing program PG1 to the processing program PG1 selected by the user, it is easy to make a processing plan such that the non-operating time TM2 is shortened with reference to the band graphs G1, G2, and G3 displayed on the display screen 201. Therefore, it is easy to make a processing plan in an efficient manner.

In this embodiment, the operation history display system 1 includes the plurality of dental processing machines 100. The operation histories LG1 in the plurality of dental processing machines 100 are stored in the server 120. The creation processing section 215 creates, during a time set in advance, the band graphs G1, G2, and G3 each of which corresponds to each of the plurality of dental processing machines 100, based on the operation history LG1. In this embodiment, the operation history LG1 in each of the plurality of dental processing machines 100 can be displayed on the display screen 201, and therefore, it is easy to grasp the operating time TM1 and the non-operating time TM2 in the plurality of dental processing machines 100. The determined non-operating times TM3 in the plurality of dental processing machines 100 are displayed on the display screen 201. Therefore, even when a processing plan in which the plurality of dental processing machines 100 is subjects is made, it is easy to make the processing plan such that the non-operating time TM2 is shortened with reference to the band graphs G1, G2, and G3 displayed on the display screen 201. Therefore, it is easy to make a processing plan in which the plurality of dental processing machines 100 is subjects in an efficient manner.

In this embodiment, the graphs G1, G2, and G3 are band graphs. Herein, the band graphs G1, G2, and G3 are used in order to indicate time-series information. As a graph according to the present invention, some other graph than a band graph, that is, for example, a pie graph, may be used. However, it is considered that the band graphs G1, G2, and G3 are more appropriate as graphs indicating time-series information than pie graphs. Therefore, with the history of the operation of the dental processing machine 100 displayed in the band graphs G1, G2, and G3, the user can easily view the history of the operation.

In this embodiment, the log file FL1 in which the operation history LG1 of the dental processing machine 100 is recorded is stored in the server 120, as illustrated in FIG. 5. The operation terminal 110 includes the receiver 116 and the transmitter 115. The receiver 116 receives the processing start time 133 and the processing end time 134 for the processing program PG1 executed by the dental processing machine 100 from the dental processing machine 100. The transmitter 115 transmits the processing start time 133 and the processing end time 134 received by the receiver 116 to the server 120. The server 120 records the processing start time 133 and the processing end time 134 transmitted from the transmitter 115 in the log file FL1. The log file FL1 is a file used to check, for example, whether appropriate processing was performed as processing of the dental processing machine 100, whether an error occurred during processing of the dental processing machine 100, or the like, and is a log file prepared also for a known dental processing machine. In this embodiment, the operation history LG1 of the dental processing machine 100 is displayed on the display screen 201 using the log file FL1 used also for a different purpose, as described above. Therefore, a dedicated file used for displaying the operation history LG1 may not be prepared, and therefore, the operation history LG1 of the dental processing machine 100 can be efficiently displayed on the display screen 201.

In this embodiment, as illustrated in FIG. 6, the error occurrence time 135 at which an error occurred in the dental processing machine 100 and the error end time 136 at which the error ended are associated in the operation history LG1. The creation processing section 215 displays the corresponding ranges to the error time TM4 between the error occurrence time 135 and the error end time 136 in the fourth color CL4 that is different from the first color CL1, the second color CL2, and the third color CL3 in the band graphs G1, G2, and G3, as illustrated in FIG. 7. Thus, a time during which an error occurred can be known at a glance from the operation history LG1 of the dental processing machine 100. Therefore, a processing plan can be made with reference to the band graphs G1, G2, and G3 created in consideration of the error time TM4.

In this embodiment, the creation processing section 215 creates the processing program list table T1 in which the file name 131 of the processing program PG1 (in other words, the processing program name 131), the processing start time 133, and the processing end time 134 are associated. The display processing section 217 displays the processing program list table T1 on the display screen 201. The determination processing section 219 determines one processing program PG1 selected from the processing program list table T1 by an operation of the operation section 202 by the user. Thus, it is easy to grasp which processing program PG1 was executed and how long the operating time TM1 of the processing program PG1 was taken then. The user can select the processing program PG1 while viewing the processing program name 131. Therefore, the present invention is useful particularly when the user desires to know the non-operating time TM2 that is longer than the operating time TM1 in arbitrary one processing program PG1.

### <Other Embodiment>

In the above described embodiment, the dental processing machine 100 to be displayed in the processing program list table T1 is selected from the pull-down menu M1 displayed on the display screen 201. The user selects one processing program PG1 from the one or more processing programs PG1 displayed in the processing program list table T1, and the corresponding ranges in the band graphs G1, G2, and G3 to the non-operating time TM2 (in other words, the determined non-operating time TM3) that is longer than the operating time TM1 of the selected processing program PG1 are displayed in different colors. As described above, in the above described embodiment, the processing program PG1 that is to be a subject is selected from the processing program list table T1. However, there is no particular limitation on a method for selecting the processing program PG1 that is to be a subject.

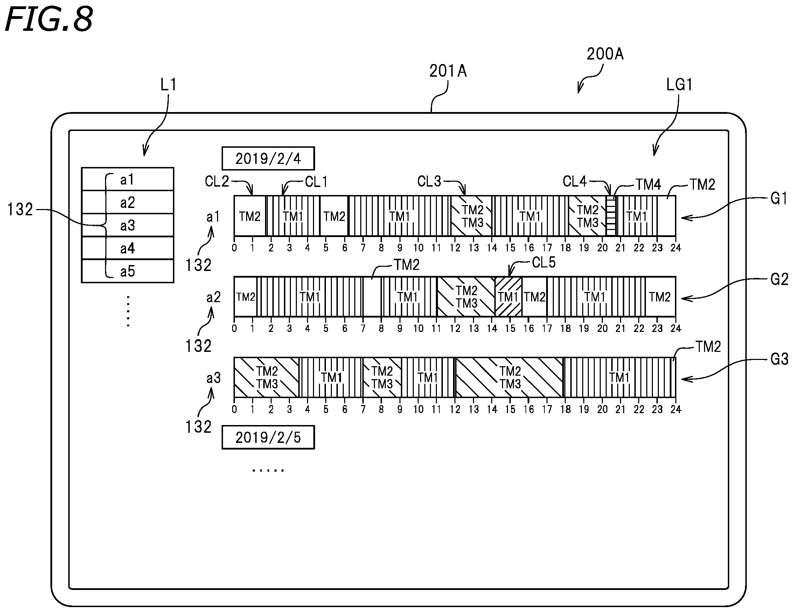

FIG. 8 is a table illustrating a display screen 201A of an operation history display device 200A according to another embodiment. As illustrated in FIG. 8, the operation history display device 200A according to this embodiment includes the display screen 201A. In the display screen 201A, a processing machine list L1 is displayed. Herein, the creation processing section 215 of FIG. 5 creates the processing machine list L1, and the display processing section 217 displays the processing machine list L1 on the display screen 201A.

The processing machine list L1 is a list of one or more dental processing machines 100 the operation histories LG1 of which can be displayed on the display screen 201. In other words, the processing machine list L1 is a list of one or more dental processing machines 100 indirectly connected to the operation history display device 200A via the server 120 and the operation terminal 110. In this embodiment, in the processing machine list L1, the one or more device IDs 132 of the one or more dental processing machines 100 the operation histories LG1 of which can be displayed are indicated. However, the one or more device IDs 132 in the processing machine list L1 may be changed to model names of the one or more dental processing machines 100 or the processing machine names that have been arbitrarily given to the one or more dental processing machines 100 by the user. In the example of FIG. 8, in the processing machine list L1, the dental processing machines 100 the device IDs 132 of which correspond to a1, a2, a3, a4, and a5 are selectably indicated.

The processing machine list L1 is configured such that the user can select, from the one or more dental processing machines 100 displayed in the processing machine list L1, one or more dental processing machines 100 by operating the operation section 202. The operation history LG1 of each of the one or more dental processing machines 100 selected from the processing machine list L1 is displayed in a band graph on the display screen 201A. In the example of FIG. 8, among the five dental processing machines 100 indicated in the processing machine list L1, three dental processing machines 100 the device IDs 132 of which correspond to a1, a2, and a3 are selected by the user by operating the operation section 202. Therefore, the band graph G1 indicating the operation history LG1 of the dental processing machine 100 the device ID 132 of which is a1, the band graph G2 indicating the operation history LG1 of the dental processing machine 100 the device ID 132 of which is a2, and the band graph G3 indicating the operation history LG1 of the dental processing machine 100 the device ID 132 of which is a3 are displayed on the display screen 201A.

Note that, in this embodiment, the operation history LG1 is indicated for one dental processing machine 100 using one band graph G1. However, the plurality of band graphs G1 may be used for one dental processing machine 100, and the number of the band graphs G1 for one dental processing machine 100 may be changed as appropriate in accordance with a period in which the operation history LG1 is displayed. For example, in a case in which a period in which the operation history LG1 can be displayed in one band graph G1 is one day, when it is desired to display the operation history LG1 for two days on the display screen 201A, the number of the band graphs G1 is two.

In this embodiment, the operation section 202 is configured such that the user can select one range of the operating time TM1 from corresponding ranges to the operating time TM1 in the band graphs G1, G2, and G3 displayed on the display screen 201A. Herein, the user can select one range of the operating time TM1 from the corresponding ranges in the band graphs G1, G2, and G3 to the operating time TM1 by operating the operation section 202. Note that the range of the operating time TM1 selected by the user is displayed in the fifth color CL5 (for example, light blue).

The non-operating time TM2 that is longer than the operating time TM1 selected by the user is determined to be the determined non-operating time TM3, and the color display processing section 221 (see FIG. 5) displays corresponding ranges in the band graphs G1, G2, and G3 to the determined non-operating time TM3 in a different color (for example, the third color CL3 (for example, green)).

In this embodiment, similar to the above described embodiment, the user can grasp at a glance in which non-operation time TM2 the processing program PG1 selected by the user can be executed from the band graphs G1, G2, and G3 displayed on the display screen 201A. Therefore, in making a processing plan including a similar processing program PG1 to the processing program PG1 selected by the user, it is easy to make the processing plan such that the non-operating time TM2 is shortened with reference to the band graphs G1, G2, and G3 displayed on the display screen 201A. Accordingly, the processing plan can be easily made in an efficient manner.

In the above described embodiment, the operation history display device 200 is connected to the plurality of dental processing machines 100 via the server 120. Among companies that introduce the operation history display system 1, some have a plurality of business bases in different locations. In this case, there is a probability that one or more dental processing machines 100 are introduced in each of the business bases. Therefore, the operation history display device 200 may be configured to display the operation history LG1 of each of the one or more dental processing machines 100 for each business base.

## Claims

1. An operation history display system (1) for a dental processing machine, the system comprising:
a storage (120) in which an operation history (LG1) in which a processing start time (133) and a processing end time (134) are associated is stored for each processing program (PG1) executed by a dental processing machine (100); and
a display processing device (210) communicably connected to the storage (120),
wherein the display processing device (210) includes
a creation processing section (215) configured to create, during a time set in advance, a graph (G1) which indicates a history of an operation of the dental processing machine (100) based on the operation history (LG1) and in which a corresponding range to an operating time (TM1) between the processing start time (133) and the processing end time (134) associated in the storage (120) is displayed in a first color (CL1) and a corresponding range to a non-operating time (TM2) that is not included in the operating time (TM1) is displayed in a second color (CL2) that is different from the first color (CL1),
a display processing section (217) configured to display the graph (G1),
a determination processing section (219) configured to determine one processing program (PG1) selected by a user, and
a color display processing section (221) configured to change display such that the corresponding range in the graph (G1) to the non-operating time (TM2) that is longer than the operating time (TM1) of the processing program (PG1) determined by the determination processing section (219) is displayed in a third color (CL3) that is different from the first color (CL1) and the second color (CL2).

2. The operation history display system (1) for a dental processing machine according to claim 1,
wherein, in the storage (120), the operation history (LG1) in each of a plurality of the dental processing machines (100) is stored, and
the creation processing section (215) creates, during a time set in advance, the graph (G1, G2, G3) that corresponds to each of the plurality of dental processing machines 100, based on the operation history (LG1).

3. The operation history display system (1) for a dental processing machine according to claim 1 or 2,
wherein the graph (G1) is a band graph.

4. The operation history display system (1) for a dental processing machine according to any one of claims 1 to 3, the system further comprising:
an operation terminal (110) communicably connected to the dental processing machine (100) and the storage (120),
wherein the storage (120) stores a log file (FL1) in which the operation history (LG1) is recorded,
the operation terminal (110) includes
a receiver (116) configured to receive the processing start time (133) and the processing end time (134) for the processing program (PG1) executed by the dental processing machine (100) from the dental processing machine (100), and
a transmitter (115) configured to transmit the processing start time (133) and the processing end time (134) received by the receiver (116) to the storage (120),
the storage (120) records the processing start time (133) and the processing end time (134) transmitted from the transmitter (115) in the log file (FL1).

5. The operation history display system (1) for a dental processing machine according to any one of claim 4,
wherein the display processing device (210) includes
an acquisition processing section (213) configured to acquire the log file (FL1) stored in the storage (120), and
the creation processing section (215) creates the graph (G1) from the operation history (LG1) of the log file (FL1) acquired by the acquisition processing section (213).

6. The operation history display system (1) for a dental processing machine according to any one of claims 1 to 5,
wherein, in the operation history (LG1), an error occurrence time (135) at which an error occurred in the dental processing machine (100) and an error end time (136) at which the error ended are associated, and
the creation processing section (215) displays, in the graph (G1), a corresponding range to an error time (TM4) between the error occurrence time (135) and the error end time (136) in a fourth color (CL4) that is different from the first color (CL1), the second color (CL2), and the third color (CL3).

7. The operation history display system (1) for a dental processing machine according to claim 6,
wherein the first color (CL1) is blue,
the second color (CL2) is white,
the third color (CL3) is green, and
the fourth color (CL4) is red.

8. The operation history display system (1) for a dental processing machine according to any one of claims 1 to 7,
wherein the creation processing section (215) creates a processing program list table (T1) in which a file name (131) of the processing program (PG1), the processing start time (133), and the processing end time (134) are associated,
the display processing section (217) displays the processing program list table (T1), and
the determination processing section (219) determines the processing program (PG1) selected by the user, based on the processing program list table (T1).

9. The operation history display system (1) for a dental processing machine according to any one of claims 1 to 8, further comprising:
a display screen (201) communicably connected to the display processing device (210),
wherein the display processing section (217) displays the graph (G1) on the display screen (201).

10. The operation history display system (1) for a dental processing machine according to any one of claims 1 to 9, further comprising:
an operation section (202) communicably connected to the display processing device (210),
wherein the determination processing section (219) determines the processing program (PG1) selected by an operation of the operation section (202) by the user.

11. The operation history display system (1) for a dental processing machine according to any one of claims 1 to 10,
wherein the color display processing section (221) displays a corresponding range in the graph (G1) to the operating time (TM1) of the processing program (PG1) determined by the determination processing section (219) in a fifth color (CL5) that is different from the first color (CL1), the second color (CL2), and the third color (CL3).

12. The operation history display system (1) for a dental processing machine according to claim 11,
wherein the fifth color (C5) is light blue.

13. An operation history display method for a dental processing machine wherein an operation history (LG1) in which a processing start time (133) and a processing end time (134) are associated is stored for each processing program (PG1) executed by a dental processing machine (100) in a storage (120);, the method comprising the steps of:
creating, during a time set in advance, a graph (G1) which indicates a history of an operation of the dental processing machine (100) based on the operation history (LG1) and in which a corresponding range to an operating time (TM1) between the processing start time (133) and the processing end time (134) associated in the storage (120) is displayed in a first color (CL1) and a corresponding range to a non-operating time (TM2) that is not included in the operating time (TM1) is displayed in a second color (CL2) that is different from the first color (CL1),
displaying the graph (G1),
determining one processing program (PG1) selected by a user, and
changing the display such that the corresponding range in the graph (G1) to the non-operating time (TM2) that is longer than the operating time (TM1) of the determined processing program (PG1) is displayed in a third color (CL3) that is different from the first color (CL1) and the second color (CL2).
